# EUROPEAN PATENT APPLICATION

(11) **EP 4 800 071 A1**
(43) Date of publication of application: **02.09.2026**
(21) Application number: 24882113.4
(22) Date of filing: 02.10.2024
(51) Int. Cl.: C08L 69/00, C08K 5/42, C08L 83/05, C09K 21/06, C09K 21/14, C08G 77/12

(54) **FLAME-RETARDANT AROMATIC POLYCARBONATE RESIN COMPOSITION AND MOLDED ARTICLE OF SAME**

(30) Priority: 27.10.2023 JP 2023184807
(71) Applicant: SHIN-ETSU CHEMICAL CO., LTD., Tokyo 100-0005 (JP)
(72) Inventor: HIGUCHI, Koichi, Annaka-shi, Gunma 379-0224 (JP); YOSHIZAWA, Masahiro, Annaka-shi, Gunma 379-0224 (JP); OMATSU, Yamato, Annaka-shi, Gunma 379-0224 (JP)
(74) Representative: Mewburn Ellis LLP
(86) International application number: PCT/JP2024/035193
(87) International publication number: WO 2025/088996

(57) **Abstract**

The present invention provides a flame-retardant aromatic polycarbonate resin composition which contains
(A) an aromatic polycarbonate resin,
(B) an organohydrogenpolysiloxane that is represented by formula (1), and
(C) an organic metal salt that does not contain fluorine, and
which contains a specific amount of an aromatic polycarbonate resin that has a specific MVR.

Formula (1): [(R¹O)(R²)₂SiO_{1/2}]ₐ[(R³)₃SiO_{1/2}]_{b}[(H)(R⁴)SiO_{2/2}]_{c}[(Ar)ₓ(R⁵)₂₋ₓSiO_{2/2}]_{d}[(R⁶)₂SiO_{2/2}]ₑ[(R⁷)SiO_{3/2}]_{f}

(In the formula, R¹ to R⁷ each represent an alkyl group or the like; Ar represents an aryl group; x is 1 or 2; 0 < a ≤ 0.03; 0 < b ≤ 0.30; 0 ≤ c ≤ 0.45; 0.20 ≤ d ≤ 0.70; 0 ≤ e ≤ 0.20; 0 ≤ f ≤ 0.70; and (a + b + c + d + e + f) is 1.)

## Description

### TECHNICAL FIELD

This invention relates to a flame-retardant aromatic polycarbonate resin composition and a molded article of the same.

### BACKGROUND ART

Aromatic polycarbonate resins are formed into various molded articles by a simple and highly productive processing method such as injection molding and are used in a wide range of industrial fields. In particular, for applications that require high transparency, such as various lighting covers and protective covers for transmissive displays, aromatic polycarbonate resins are widely used by taking advantage of their excellent transparency represented by a high light transmittance and very low haze. In these applications, it is necessary to maintain transparency, hues, and mechanical properties even when such molded articles are exposed to heat or moisture, for reasons such as that a light source such as a fluorescent lamp or a light bulb becomes high in temperature, or that when used in a bathroom or outdoors, the molded articles are exposed to high humidity; therefore, in addition to transparency of resin compositions, moist heat resistance of the resin compositions is regarded as important.

In these applications, in recent years, flame retardancy in the event of a fire has also attracted attention, and a resin composition having, in addition to the above properties, a high level of flame retardancy is required. As a method for imparting flame retardancy to an aromatic polycarbonate resin, flame-retardant aromatic polycarbonate resin compositions containing a halogen compound or a phosphorus compound have hitherto been proposed and are used in OA equipment, home electric appliances, and the like for which there is a strong demand for flame retardancy; meanwhile, flame-retardant aromatic polycarbonate resin compositions containing a component that replaces these flame retardants have been developed and are being used in the products described above, and the like. Purposes of this change of flame retardant include, for example, suppression of generation of corrosive gas during molding, and improvement of recyclability of products.

Examples of new flame retardants that replace the flame retardants described above include silicone compounds. In recent years, flame-retardant resin compositions obtained by blending a silicone compound into an aromatic polycarbonate resin have been actively studied, and various proposals have been made.

For example, Patent Document 1 proposes a method of blending a perfluoroalkanesulfonic acid alkali (alkaline earth) metal salt and an organic siloxane having an alkoxy group, a vinyl group, and a phenyl group into a polycarbonate resin, and Patent Document 2 proposes a method of blending an alkali metal salt or alkaline earth metal salt of a perfluoroalkanesulfonic acid and an organopolysiloxane containing an organoxysilyl group bonded to a silicon atom via a divalent hydrocarbon group into a polycarbonate resin, and the like.

Patent Document 3 proposes a method of blending a specific petroleum-based heavy oil or pitch and a silicone compound into a polycarbonate resin component, and Patent Document 4 proposes a method of blending, into a non-silicone resin having an aromatic ring, a silicone resin having a unit represented by a formula R⁰₂SiO_{1.0} (wherein each R⁰ represents a monovalent hydrocarbon group, and the same applies hereinafter) and a constitutional unit represented by R⁰SiO_{1.5}, and having a weight-average molecular weight of 10,000 or more and 270,000 or less, and the like.

However, the polycarbonate resin compositions proposed above do not have sufficient transparency and flame retardancy. In particular, there are problems such as that, in a case of a thin wall, dripping occurs and a V-0 rating of the UL-94 standard cannot be achieved, that dispersion of a silicone component is insufficient and a molded article becomes cloudy, and that a silicone component aggregates due to moist heat treatment, resulting in a decrease in transparency after the moist heat treatment.

Meanwhile, Patent Document 5 specifically proposes a resin composition in which an organic alkali metal salt and poly(methylhydrogensiloxane) are added to an aromatic polycarbonate resin. However, this resin composition becomes cloudy as the resin composition itself, and furthermore, poor dispersion, such as detachment at the surface of a molded article, occurs, and transparency is not sufficient.

Further, Patent Documents 6 and 7 propose transparent flame-retardant polycarbonate resin compositions obtained by blending a silicone component containing a Si-H group and an aromatic group in the molecule with an aromatic polycarbonate resin.

Patent Document 8 proposes a flame-retardant polycarbonate resin composition containing a specific core-shell graft copolymer having a butadiene-based rubber as a core and blended in an aromatic polycarbonate resin, and further containing a fluorinated polyolefin and an organic sulfonic acid metal salt-based flame retardant, specifically, potassium perfluorobutanesulfonate.

In the above prior art documents, polytetrafluoroethylene having fibril-forming capability is often used as a dripping inhibitor. However, when polytetrafluoroethylene is blended into an aromatic polycarbonate resin, the appearance of a molded article becomes cloudy because polytetrafluoroethylene and the aromatic polycarbonate resin are incompatible.

Further, an organic sulfonic acid metal salt, specifically, potassium perfluorobutanesulfonate, is often used as a flame retardant; however, this also has a disadvantage in that the appearance becomes cloudy because the organic sulfonic acid metal salt is incompatible with the aromatic polycarbonate resin.

Meanwhile, in recent years, fluorine compounds have become subject to regulations internationally, led by Japan, Europe, the United States, etc., and there is also a movement to further strengthen the regulations. In Europe, perfluorobutanesulfonic acid and metal salts thereof (PFBS) are regulated by REACH, and regulations on organic fluorine compounds such as perfluoro- and polyfluoroalkyl substances (PFAS) typified by polytetrafluoroethylene are also advancing mainly in Europe and the United States.

### PRIOR ART DOCUMENTS

### PATENT DOCUMENTS

Patent Document 1: JP-A H06-306265
Patent Document 2: JP-A H06-336547
Patent Document 3: JP-A H09-169914
Patent Document 4: JP-A H10-139964
Patent Document 5: JP-B S60-38419
Patent Document 6: JP 3779623
Patent Document 7: JP 3779624
Patent Document 8: JP-A 2019-19191

### SUMMARY OF INVENTION

### TECHNICAL PROBLEM

Accordingly, in order to comply with the above PFBS regulations and PFAS regulations, there is a strong demand for a polycarbonate resin composition that exhibits excellent flame retardancy without relying on a metal salt of perfluorobutanesulfonic acid or polytetrafluoroethylene. However, it is not easy to achieve flame retardancy (V-0 under the UL-94 standard) without using perfluorobutanesulfonic acid and metal salts thereof, which are effective flame retardants, and polytetrafluoroethylene, which is an effective dripping inhibitor.

The present invention has been made in view of the above circumstances, and an object thereof is to provide a flame-retardant aromatic polycarbonate resin composition that is excellent in transparency and excellent in anti-dripping property of the resin during combustion, even without using a fluorine compound, and a molded article thereof.

### SOLUTION TO PROBLEM

As a result of intensive studies to achieve the above object, the present inventors have found that a resin composition containing a specific aromatic polycarbonate resin, a specific organohydrogenpolysiloxane, and an organic acid metal salt free of fluorine is excellent in transparency and anti-dripping property of the resin during combustion, and have completed the present invention.

Accordingly, the present invention provides:
1. A flame-retardant aromatic polycarbonate resin composition containing:
   (A) 100 parts by weight of an aromatic polycarbonate resin,
   (B) 0.1 to 10 parts by weight of an organohydrogenpolysiloxane represented by the following formula (1) and having a weight-average molecular weight of 700 to 10,000, and
   (C) 0.001 to 1.0 part by weight of at least one selected from an organic alkali metal salt free of fluorine and an organic alkaline earth metal salt free of fluorine,
   wherein the flame-retardant aromatic polycarbonate resin composition contains an aromatic polycarbonate resin having a melt volume-flow rate (MVR) of 2 to 8 cm³/10 min as measured at 300°C and a load of 1.2 kg in accordance with ISO 1133-1, in an amount of 20% by weight or more relative to a total weight of the component (A):

   [(R¹O)(R²)₂SiO_{1/2}]ₐ[(R³)₃SiO_{1/2}]_{b}(H)(R⁴)SiO_{2/2}]_{c}[(Ar)ₓ(R⁵)₂₋ₓSiO_{2/2}]_{d}[(R⁶)₂SiO_{2/2}]ₑ[(R⁷)SiO_{3/2}]_{f} (1)

   wherein R¹ is a hydrogen atom or an alkyl group having 1 to 3 carbon atoms,
   R² and R³ are each independently a hydrogen atom, an alkyl group having 1 to 6 carbon atoms, or an aryl group having 6 to 12 carbon atoms,
   R⁴ is an alkyl group having 1 to 6 carbon atoms or an aryl group having 6 to 12 carbon atoms, each Ar is independently an aryl group having 6 to 12 carbon atoms,
   R⁵ and R⁶ are each independently an alkyl group having 1 to 6 carbon atoms,
   each R⁷ is independently an alkenyl group having 2 to 8 carbon atoms, an aryl group having 6 to 12 carbon atoms, or an alkyl group that has 1 to 8 carbon atoms and that may be substituted with an epoxy group, an amino group, an acryloyl group, a methacryloyl group, or a thiol group,
   x represents 1 or 2,
   a is a number satisfying 0 < a ≤ 0.03,
   b is a number satisfying 0 < b ≤ 0.30,
   c is a number satisfying 0 ≤ c ≤ 0.45,
   d is a number satisfying 0.20 ≤ d ≤ 0.70,
   e is a number satisfying 0 ≤ e ≤ 0.20,
   f is a number satisfying 0 ≤ f ≤ 0.70, and
   a + b + c + d + e + f is 1,
   provided that, when c is 0, at least one of R² and R³ is a hydrogen atom,
2. The flame-retardant aromatic polycarbonate resin composition according to 1, wherein, in the formula (1), Ar is a phenyl group, x is 2, and f is 0,
3. The flame-retardant aromatic polycarbonate resin composition according to 1 or 2, wherein the component (C) is an alkali metal salt of an aromatic sulfonic acid free of fluorine or an alkaline earth metal salt of an aromatic sulfonic acid free of fluorine, and
4. A molded article molded from the flame-retardant aromatic polycarbonate resin composition according to any one of 1 to 3.

### ADVANTAGEOUS EFFECTS OF INVENTION

The flame-retardant aromatic polycarbonate resin composition of the present invention exhibits excellent transparency and flame retardancy even without using a fluorine compound and can comply with PFAS regulations.

### DESCRIPTION OF EMBODIMENTS

Hereinafter, the present invention will be specifically described.

### Flame-retardant aromatic polycarbonate resin composition

[1] A flame-retardant aromatic polycarbonate resin composition of the present invention contains the following components (A) to (C):
(A) an aromatic polycarbonate resin,
(B) an organohydrogenpolysiloxane represented by a formula (1), and
(C) at least one selected from an organic alkali metal free of fluorine and an organic alkaline earth metal salt free of fluorine.

### [Component (A)]

The component (A) in the flame-retardant aromatic polycarbonate resin composition of the present invention is an aromatic polycarbonate resin, and examples of the aromatic polycarbonate resin that can be used include resins obtained by reacting a dihydric phenol and a carbonate precursor by an interfacial polycondensation method or a melt transesterification method, resins obtained by polymerizing a carbonate prepolymer by a solid-phase transesterification method, and resins obtained by polymerizing a cyclic carbonate compound by a ring-opening polymerization method.

Specific examples of the dihydric phenol used herein include hydroquinone, resorcinol, 4,4'-dihydroxydiphenyl, bis(4-hydroxyphenyl)methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (commonly referred to as bisphenol A), 2,2-bis{(4-hydroxy-3-methyl)phenyl}propane, 2,2-bis{(4-hydroxy-3,5-dimethyl)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)-4-isopropylcyclohexane, 1,1-bis(4-hydroxyphenyl)-3,3,5-trimethylcyclohexane, 9,9-bis(4-hydroxyphenyl)fluorene, 9,9-bis{(4-hydroxy-3-methyl)phenyl}fluorene, α,α'-bis(4-hydroxyphenyl)-o-diisopropylbenzene, α,α'-bis(4-hydroxyphenyl)-m-diisopropylbenzene, α,α'-bis(4-hydroxyphenyl)-p-diisopropylbenzene, 1,3-bis(4-hydroxyphenyl)-5,7-dimethyladamantane, 4,4'-dihydroxydiphenyl sulfone, 4,4'-dihydroxydiphenyl sulfoxide, 4,4'-dihydroxydiphenyl sulfide, 4,4'-dihydroxydiphenyl ketone, 4,4'-dihydroxydiphenyl ether, and 4,4'-dihydroxydiphenyl ester. These may be used alone or as a mixture of two or more thereof.

In particular, a homopolymer or copolymer obtained from at least one bisphenol selected from the group consisting of bisphenol A, 2,2-bis{(4-hydroxy-3-methyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, and α,α'-bis(4-hydroxyphenyl)-m-diisopropylbenzene is preferable, and a homopolymer of bisphenol A, and a copolymer of 1,1-bis(4-hydroxyphenyl)-3,3,5-trimethylcyclohexane with bisphenol A, 2,2-bis{(4-hydroxy-3-methyl)phenyl}propane, or α,α'-bis(4-hydroxyphenyl)-m-diisopropylbenzene are particularly preferably used.

Examples of the carbonate precursor include carbonyl halides, carbonate esters, and haloformates, and specific examples thereof include phosgene, diphenyl carbonate, and dihaloformates of dihydric phenols.

In producing a polycarbonate resin by reacting the dihydric phenol and the carbonate precursor by the interfacial polycondensation method or the melt transesterification method, a catalyst, an end-capping agent, an antioxidant for the dihydric phenol, and the like may be used as necessary.

The polycarbonate resin may be a branched polycarbonate resin obtained by copolymerizing a trifunctional or higher polyfunctional aromatic compound or a polyester carbonate resin obtained by copolymerizing an aromatic or aliphatic difunctional carboxylic acid or may be a mixture obtained by mixing two or more of the obtained polycarbonate resins.

Specific examples of the trifunctional or higher polyfunctional aromatic compound include trisphenols such as phloroglucin, phloroglucide, 4,6-dimethyl-2,4,6-tris(4-hydroxyphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, 4-{4-[1,1-bis(4-hydroxyphenyl)ethyl]benzene}-α,α-dimethylbenzylphenol; tetra(4-hydroxyphenyl)methane, bis(2,4-dihydroxyphenyl)ketone, and 1,4-bis(4,4-dihydroxytriphenylmethyl)benzene; trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

When a polyfunctional compound that produces the above branched polycarbonate resin is included, the proportion thereof is preferably 0.001% to 1% by mole, more preferably 0.005% to 0.5% by mole, and still more preferably 0.01% to 0.3% by mole, based on the total amount of the aromatic polycarbonate.

Further, particularly in the case of the melt transesterification method, a branched structure may be generated as a side reaction, and the amount of the branched structure is also preferably 0.001% to 1% by mole, more preferably 0.005% to 0.5% by mole, and still more preferably 0.01% to 0.3% by mole, based on the total amount of the aromatic polycarbonate. This proportion can be calculated by ¹H-NMR measurement.

The reaction by the interfacial polycondensation method is usually a reaction between a dihydric phenol and phosgene, and is performed in the presence of an acid-binding agent and an organic solvent.

Specific examples of the acid-binding agent include alkali metal hydroxides such as sodium hydroxide and potassium hydroxide, and amine compounds such as pyridine.

Specific examples of the organic solvent include halogenated hydrocarbons such as methylene chloride and chlorobenzene.

In addition, catalysts such as tertiary amines, quaternary ammonium compounds, and quaternary phosphonium compounds, for example, triethylamine, tetra-n-butylammonium bromide, and tetra-n-butylphosphonium bromide, can also be used to promote the reaction.

The reaction conditions are not particularly limited, and for example, the reaction temperature is usually preferably 0°C to 40°C, the reaction time is preferably about 10 minutes to 5 hours, and the pH during the reaction is preferably maintained at 9 or more.

In the above polymerization reaction, an end-capping agent is usually used. A monofunctional phenol can be used as such an end-capping agent. Monofunctional phenols are generally used as end-capping agents for molecular weight control. A specific monofunctional phenol is generally phenol or a lower alkyl-substituted phenol, and examples thereof include monofunctional phenols represented by the following general formula (2). 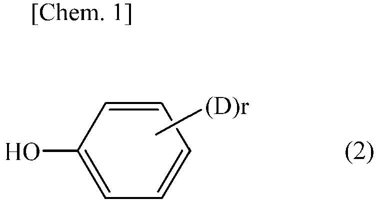 (wherein D is a hydrogen atom, a linear or branched alkyl group having 1 to 9 carbon atoms, or a phenyl group-substituted alkyl group, and r is an integer of 1 to 5, preferably 1 to 3.)

Specific examples of the monofunctional phenol include phenol, p-tert-butylphenol, p-cumylphenol, and isooctylphenol.

Other monofunctional phenols include phenols and benzoic acid chlorides having a long-chain alkyl group or aliphatic polyester group as a substituent, and long-chain alkyl carboxylic acid chlorides. Among these, phenols having a long-chain alkyl group as a substituent and represented by the following general formulas (3) and (4) are preferably used. 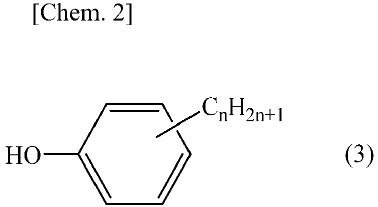 (wherein n represents an integer of 10 to 50.) 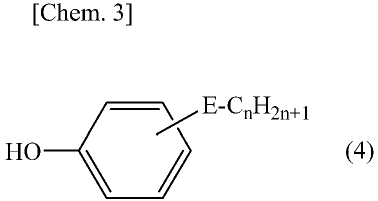 (wherein E is -R-O-, -R-C(=O)-O-, or -R-O-C(=O)-, R represents a single bond or a divalent aliphatic hydrocarbon group having 1 to 10 carbon atoms, preferably 1 to 5 carbon atoms, and n represents an integer of 10 to 50.)

As the substituted phenols represented by the general formula (3), those in which n is 10 to 30 are preferable, and those in which n is 10 to 26 are more preferable. Specific examples thereof include decylphenol, dodecylphenol, tetradecylphenol, hexadecylphenol, octadecylphenol, eicosylphenol, docosylphenol, and triacontylphenol.

As the substituted phenols represented by the general formula (4), compounds in which E is -R-C(=O)-O- and R is a single bond are preferable, and those in which n is 10 to 30, particularly 10 to 26, are suitable. Specific examples thereof include decyl hydroxybenzoate, dodecyl hydroxybenzoate, tetradecyl hydroxybenzoate, hexadecyl hydroxybenzoate, eicosyl hydroxybenzoate, docosyl hydroxybenzoate, and triacontyl hydroxybenzoate.

These end-capping agents may be used alone or as a mixture of two or more thereof.

The reaction by the melt transesterification method is usually a transesterification reaction between a dihydric phenol and a carbonate ester, and is performed, for example, by a method in which the dihydric phenol and the carbonate ester are mixed together while being heated in the presence of an inert gas, and an alcohol or phenol generated is distilled off.

The reaction conditions are not particularly limited, and the reaction temperature varies depending on, for example, the boiling point of the alcohol or phenol generated, and is usually preferably 120°C to 350°C. In the later stage of the reaction, it is preferable to reduce the pressure of the system to about 1.33 × 10³ to 13.3 Pa to facilitate distillation of the alcohol or phenol generated. The reaction time is usually preferably about one to four hours.

Examples of the carbonate ester include esters of an optionally substituted aryl group having 6 to 10 carbon atoms, aralkyl group having 7 to 10 carbon atoms, alkyl group having 1 to 4 carbon atoms, and the like. Specific examples thereof include diphenyl carbonate, bis(chlorophenyl) carbonate, dinaphthyl carbonate, bis(diphenyl) carbonate, dimethyl carbonate, diethyl carbonate, and dibutyl carbonate, and among these, diphenyl carbonate is preferable.

A polymerization catalyst can be used to increase the polymerization rate. Examples of the polymerization catalyst include catalysts commonly used in esterification reactions and transesterification reactions, such as alkali metal compounds, e.g., sodium hydroxide, potassium hydroxide, and sodium salts and potassium salts of dihydric phenols, alkaline earth metal compounds, e.g., calcium hydroxide, barium hydroxide, and magnesium hydroxide, nitrogen-containing basic compounds, e.g., tetramethylammonium hydroxide, tetraethylammonium hydroxide, trimethylamine, and triethylamine; alkoxides of alkali metals or alkaline earth metals; organic acid salts of alkali metals or alkaline earth metals, zinc compounds, boron compounds, aluminum compounds, silicon compounds, germanium compounds, organotin compounds, lead compounds, osmium compounds, antimony compounds, manganese compounds, titanium compounds, and zirconium compounds. These catalysts may be used alone or in combination of two or more thereof.

The amount of the polymerization catalyst used is selected in the range of preferably 1×10⁻⁸ to 1×10⁻³ equivalents, more preferably 1×10⁻⁷ to 5×10⁻⁴ equivalents relative to 1 mol of the dihydric phenol serving as a starting compound.

Further, in the polymerization reaction, in order to decrease phenolic terminal groups, for example, compounds such as bis(chlorophenyl) carbonate, bis(bromophenyl) carbonate, bis(nitrophenyl) carbonate, bis(phenylphenyl) carbonate, chlorophenyl phenyl carbonate, bromophenyl phenyl carbonate, nitrophenyl phenyl carbonate, phenyl phenyl carbonate, methoxycarbonyl phenyl phenyl carbonate, and ethoxycarbonyl phenyl phenyl carbonate can be added in the later stage of the polycondensation reaction or after completion thereof.

Among these, 2-chlorophenyl phenyl carbonate, 2-methoxycarbonyl phenyl phenyl carbonate, and 2-ethoxycarbonyl phenyl phenyl carbonate are preferable, and 2-methoxycarbonyl phenyl phenyl carbonate is more preferable.

Further, in the polymerization reaction, a deactivator that neutralizes the activity of the catalyst is preferably used. Specific examples of the deactivator include, but are not limited to, benzenesulfonic acid, p-toluenesulfonic acid, sulfonate esters such as methyl benzenesulfonate, ethyl benzenesulfonate, butyl benzenesulfonate, octyl benzenesulfonate, phenyl benzenesulfonate, methyl p-toluenesulfonate, ethyl p-toluenesulfonate, butyl p-toluenesulfonate, octyl p-toluenesulfonate, and phenyl p-toluenesulfonate; and compounds such as naphthalenesulfonic acid, sulfonated polystyrene, methyl acrylate-sulfonated styrene copolymers, 2-phenyl-2-propyl dodecylbenzenesulfonate, 2-phenyl-2-butyl dodecylbenzenesulfonate, tetrabutylphosphonium octylsulfonate, tetrabutylphosphonium decylsulfonate, tetrabutylphosphonium benzenesulfonate, tetraethylphosphonium dodecylbenzenesulfonate, tetrabutylphosphonium dodecylbenzenesulfonate, tetrahexylphosphonium dodecylbenzenesulfonate, tetraoctylphosphonium dodecylbenzenesulfonate, decylammonium butyl sulfate, decylammonium decyl sulfate, dodecylammonium methyl sulfate, dodecylammonium ethyl sulfate, dodecylmethylammonium methyl sulfate, dodecyldimethylammonium tetradecyl sulfate, tetradecyldimethylammonium methyl sulfate, tetramethylammonium hexyl sulfate, decyltrimethylammonium hexadecyl sulfate, tetrabutylammonium dodecylbenzyl sulfate, tetraethylammonium dodecylbenzyl sulfate, and tetramethylammonium dodecylbenzyl sulfate. These compounds may be used alone or in combination of two or more thereof.

Among the deactivators, a phosphonium salt or an ammonium salt is preferable.

The amount of the deactivator is preferably 0.5 to 50 mol relative to 1 mol of the remaining catalyst, and is preferably 0.01 to 500 ppm, more preferably 0.01 to 300 ppm, and still more preferably 0.01 to 100 ppm relative to the polycarbonate resin after polymerization.

The molecular weight of the aromatic polycarbonate resin of the component (A) is not particularly limited, but from the viewpoints of mechanical properties at high temperature and molding processability, a viscosity-average molecular weight is preferably 10,000 to 50,000, more preferably 14,000 to 45,000, and still more preferably 14,000 to 40,000. The viscosity-average molecular weight can be calculated from Schnell's equation ([η] = 1.23×10⁻⁵ × Mv^{0.83}) by measuring the limiting viscosity [η] of a methylene chloride solution at 20°C.

The component (A) may be used alone or in combination of two or more types thereof.

As the component (A), a commercially available product can be used, and examples thereof include Novarex M-7027U and M-7025U (branched polycarbonate resins, manufactured by Mitsubishi Engineering-Plastics Corporation), Panlite K-1300Y (high-molecular-weight polycarbonate resin, manufactured by Teijin Limited), Tarflon IR-2500 (high-molecular-weight polycarbonate resin, manufactured by Idemitsu Kosan Co., Ltd.), FN-2200 (standard polycarbonate resin, manufactured by Idemitsu Kosan Co., Ltd.), and Iupilon S-3000N (standard polycarbonate resin, manufactured by Mitsubishi Engineering-Plastics Corporation).

In general, products commercially available as high-molecular-weight types and branched types are aromatic polycarbonate resins having a high viscosity-average molecular weight, tend to have a low melt volume-flow rate (MVR), which is an index indicating fluidity and moldability, and are preferable.

The component (A) in the flame-retardant aromatic polycarbonate resin composition of the present invention contains an aromatic polycarbonate resin having an MVR of 2 to 8 cm³/10 min at 300°C and a load of 1.2 kg based on ISO 1133-1, in an amount of 20% by weight or more relative to a total weight of the component (A), and the amount is preferably 30% by weight or more, and more preferably 50% by weight or more. If the content of such an aromatic polycarbonate resin is less than 20% by weight, dripping resistance cannot be obtained. The upper limit is not particularly limited, but is preferably 95% by weight or less, and more preferably 90% by weight or less.

If the MVR is less than 2 cm³/10 min, fluidity is insufficient and moldability tends to be poor, and if the MVR exceeds 8 cm³/min, impact resistance and the like decrease.

The aromatic polycarbonate resin of the component (A) preferably contains no halogen-substituted skeleton such as a halogen-substituted dihydric phenol in the molecule.

The aromatic polycarbonate resin of the component (A) may contain an aromatic polycarbonate resin regenerated from used products (so-called material-recycled polycarbonate resin) or an aromatic polycarbonate resin produced from products obtained by chemically decomposing aromatic polycarbonate resins back to starting compounds (so-called chemically recycled polycarbonate resin).

### [Component (B)]

The component (B) in the flame-retardant aromatic polycarbonate resin composition of the present invention is an organohydrogenpolysiloxane having a constitutional unit ratio represented by the following formula (1).

[(R¹O)(R²)₂SiO_{1/2}]ₐ(R³)₃SiO_{1/2}]_{b}(H)(R⁴)SiO_{2/2}]_{c}[(Ar)ₓ(R⁵)₂₋ₓSiO_{2/2}]_{d}[(R⁶)₂SiO_{2/2}]ₑ[(R⁷)SiO_{3/2}]_{f} (1)

In the formula, R¹ is a hydrogen atom or an alkyl group having 1 to 3 carbon atoms, R² and R³ are each independently a hydrogen atom, an alkyl group having 1 to 6 carbon atoms, or an aryl group having 6 to 12 carbon atoms, R⁴ is an alkyl group having 1 to 6 carbon atoms or an aryl group having 6 to 12 carbon atoms, each Ar is independently an aryl group having 6 to 12 carbon atoms, R⁵ and R⁶ are each independently an alkyl group having 1 to 6 carbon atoms, and each R⁷ is independently an alkenyl group having 2 to 8 carbon atoms, an aryl group having 6 to 12 carbon atoms, or an alkyl group that has 1 to 8 carbon atoms and that may be substituted with epoxy, amino, acryloyl, methacryloyl, or thiol.

x represents 1 or 2, a is a number satisfying 0 < a ≤ 0.03, b is a number satisfying 0 < b ≤ 0.30, c is a number satisfying 0 ≤ c ≤ 0.45, d is a number satisfying 0.20 ≤ d ≤ 0.70, e is a number satisfying 0 ≤ e ≤ 0.20, f is a number satisfying 0 ≤ f ≤ 0.70, and a + b + c + d + e + f is 1, provided that, when c is 0, at least one of R² and R³ is a hydrogen atom.

Specific examples of the alkyl group having 1 to 3 carbon atoms for R¹ include methyl, ethyl, and propyl groups, and in particular, R¹ is preferably a hydrogen atom or a methyl group.

For R² and R³, the alkyl group having 1 to 6 carbon atoms preferably has 1 to 3 carbon atoms, and specific examples thereof include methyl, ethyl, propyl, butyl, pentyl, and hexyl groups, and the aryl group having 6 to 12 carbon atoms preferably has 6 to 10 carbon atoms, and specific examples thereof include phenyl, tolyl, xylyl, and naphthyl groups.

Among these, R² and R³ are preferably a hydrogen atom, a methyl group, or a phenyl group, and more preferably a methyl group.

Specific examples of the alkyl group having 1 to 6 carbon atoms or the aryl group having 6 to 12 carbon atoms for R⁴ include the same groups as those exemplified for R² and R³ above, and among these, R⁴ is preferably a methyl group or a phenyl group, and more preferably a methyl group.

The aryl group having 6 to 12 carbon atoms represented by Ar preferably has 6 to 10 carbon atoms, and specific examples thereof include the same aryl groups as those exemplified for R² and R³ above, and among these, a phenyl group is preferable.

The alkyl group having 1 to 6 carbon atoms for R⁵ and R⁶ preferably has 1 to 3 carbon atoms, and specific examples thereof include the same groups as those exemplified for R² and R³ above, and among these, a methyl group is preferable.

The alkenyl group having 2 to 8 carbon atoms for R⁷ preferably has 2 to 6 carbon atoms, and specific examples thereof include vinyl, allyl, butenyl, hexenyl, and octenyl groups.

Specific examples of the aryl group having 6 to 12 carbon atoms include the same aryl groups as those exemplified for R² and R³ above.

Specific examples of the alkyl group that has 1 to 8 carbon atoms and that may be substituted with an epoxy group, an amino group, an acryloyl group, a methacryloyl group, or a thiol group include methyl, ethyl, propyl, butyl, hexyl, octyl, glycidoxypropyl, aminopropyl, (meth)acryloylpropyl, and mercaptopropyl groups.

Among these, R⁷ is preferably a methyl group, a glycidoxypropyl group, an aminopropyl group, a (meth)acryloylpropyl group, a mercaptopropyl group, or a phenyl group, more preferably a methyl group or a phenyl group, and still more preferably a phenyl group.

The subscript a is a number satisfying 0 < a ≤ 0.03 and is preferably a number satisfying 0.005 ≤ a ≤ 0.025.

The subscript b is a number satisfying 0 < b ≤ 0.30 and is preferably a number satisfying 0.01 ≤ b ≤ 0.25.

The subscript c is a number satisfying 0 ≤ c ≤ 0.45 and is preferably a number satisfying 0.1 ≤ c ≤ 0.40.

The subscript d is a number satisfying 0.20 ≤ d ≤ 0.70 and is preferably a number satisfying 0.22 ≤ d ≤ 0.40.

The subscript e is a number satisfying 0 ≤ e ≤ 0.20 and is preferably a number satisfying 0.02 ≤ e ≤ 0.15.

The subscript f is a number satisfying 0 ≤ f ≤ 0.70 and is preferably a number satisfying 0 ≤ f ≤ 0.60.

The subscript x is 1 or 2 and is preferably 2.

However, when c is 0, at least one of R² and R³ is a hydrogen atom, and one of R³ is preferably a hydrogen atom.

The sequence of siloxane units in the component (B) is not particularly limited, and may be any form of random copolymerization, block copolymerization, and tapered copolymerization.

As the component (B), an organohydrogenpolysiloxane represented by formula (1) in which Ar is a phenyl group and x is 2 is preferable, and an organohydrogenpolysiloxane represented by formula (1) in which Ar is a phenyl group, x is 2, and f is 0 is more preferable. Specific examples of the component (B) include, but are not limited to, those represented by the following formulas:

[(R¹¹O)(CH₃)₂SiO_{1/2}]ₐ[(CH₃)₃SiO_{1/2}]_{b}[H(CH₃)SiO_{2/2}]_{c1}[(C₆H₅)₂SiO_{2/2}]_{d}[(CH₃)₂SiO_{2/2}]ₑ₁

[(R¹¹O)(CH₃)₂SiO_{1/2}]ₐ[H(CH₃)₂SiO_{1/2}]_{b}[(C₆H₅)₂SiO_{2/2}]_{d}[(CH₃)₂SiO_{2/2}]ₑ₁[C₆H₅SiO_{3/2}]_{f1}

(wherein R¹¹ is a hydrogen atom or a methyl group, a, b, d, and f are as defined above, c1 is a number satisfying 0.1 ≤ c1 ≤ 0.40, e1 is a number satisfying 0.02 ≤ e1 ≤ 0.15, and f1 is a number satisfying 0.10 ≤ f1 ≤ 0.60.)

The weight-average molecular weight (Mw) of the component (B) as determined by gel permeation chromatography (GPC) is 700 to 10,000, preferably 800 to 9,000. If the Mw is less than 700, the component (B) is likely to volatilize during kneading, thereby decreasing the amount of the component (B) blended, and a flame-retardant effect cannot be obtained. On the other hand, if the Mw is more than 10,000, compatibility and dispersibility with respect to the component (A) decrease, and transparency and flame retardancy of the composition decrease.

In the component (B), chloride ions (Cl⁻) and sulfate ions (SO₄²⁻) derived from an acid catalyst used in production may remain. These residual ions may cause thermal decomposition of the composition and corrosion of metal parts of an apparatus at high temperatures during, for example, kneading or injection molding; therefore, the contents of chloride ions and sulfate ions relative to the weight of the component (B) are each preferably 3 ppm by weight or less.

When the component (B) contains volatile components, volatilization of the volatile components during kneading or injection molding may cause disadvantages such as molding defects; therefore, a weight loss when heated at 150°C for 30 minutes at 1 atm is preferably 3% by weight or less relative to the weight of the component (B).

The component (B) preferably has a volume of hydrogen gas generated per unit weight by an alkali decomposition method of 30 to 80 mL/g. More preferably, the volume is 40 to 70 mL/g. When the volume is 30 mL/g or more, formation of a structure of the component (B) is facilitated, and dripping during combustion can be suppressed. When the volume is 80 mL/g or less, it is possible to suppress cloudiness of a molded article due to foaming caused by generation of hydrogen gas from the resin composition when excess Si-H groups react with moisture in air during heat treatment. Herein, the structure of the component (B) refers to a network structure generated by a mutual reaction of the organohydrogenpolysiloxane itself, or by a reaction between the aromatic polycarbonate resin and the organohydrogenpolysiloxane.

As reported in Patent Documents 6 and 7 described above, an organohydrogenpolysiloxane containing a Si-H group and an aromatic group in the molecule is known to act as a flame retardant. In the component (B) in the present invention, a constitutional unit represented by [(R¹O)(R²)₂SiO_{1/2}] (wherein R¹ and R² are as defined above; the same applies hereinafter) is present together with the above groups; therefore, flame retardancy is improved. This is presumably because, during combustion, the component (B) migrates to the surface, and in addition to the formation of the structure by Si-H groups, the formation of the structure due to crosslinking between (R¹O) groups and crosslinking between an (R¹O) group and a Si-H group increases, thereby suppressing dripping.

In the flame-retardant aromatic polycarbonate resin composition of the present invention, from the viewpoint of improving dispersibility of the component (B) and suppressing cloudiness of the composition or a decrease in transparency due to moist heat treatment, an amount of aryl groups in the component (B) is preferably 10% to 80% by weight, and more preferably 15% to 70% by weight. Herein, the amount of aryl groups can be determined by the following calculation formula. $Amount of aryl groups = \left[A/M\right] \times 100 \left(% by weight\right)$
A: total formula weight of aryl groups per molecule of the component (B)
M: weight-average molecular weight of the component (B)

The component (B) may be used alone, or two or more types thereof may be used in combination.

The amount of the component (B) blended is 0.1 to 10 parts by weight relative to 100 parts by weight of the aromatic polycarbonate resin of the component (A) and is preferably 0.5 to 7 parts by weight, and more preferably 1 to 5 parts by weight. If the amount is less than 0.1 parts by weight, flame retardancy is not obtained, and if the amount exceeds 10 parts by weight, transparency of the composition decreases or molding defects are caused.

The organohydrogenpolysiloxane of the component (B) can be obtained, for example, by subjecting an organochlorosilane to co-hydrolytic condensation, and removing hydrochloric acid and low-boiling components that are produced as by-products.

As for a method for introducing an [(R¹O)(R²)₂SiO_{1/2}] unit, by using, as a starting compound, a silane having a Si-H group such as dimethylchlorosilane (H(CH₃)₂SiCl), a hydrogen atom of the Si-H group can be easily converted into an R¹O group by hydrochloric acid produced as a by-product during the reaction.

Alternatively, when a linear siloxane, a cyclic siloxane, or an alkoxysilane is used as a starting compound, the organohydrogenpolysiloxane of the component (B) can also be obtained by causing an equilibration reaction and a condensation reaction to proceed using an acid catalyst such as sulfuric acid or methanesulfonic acid, and then removing the acid catalyst used and low-boiling components.

In this case, by using hexamethyldisiloxane or the like as a terminal component and performing an equilibration reaction using trifluoromethanesulfonic acid, p-toluenesulfonic acid, or the like having strong acidity, part of methyl groups in a trimethylsilyl group [(CH₃)₃SiO_{1/2}] is cleaved and converted into an R¹O group.

### [Component (C)]

The component (C) in the flame-retardant aromatic polycarbonate resin composition of the present invention is at least one selected from an organic alkali metal salt free of fluorine and an organic alkaline earth metal salt free of fluorine and is a component that improves flame retardancy. The aromatic polycarbonate resin composition of the present invention preferably contains no fluorinated organic alkali metal salt or organic alkaline earth metal salt, such as potassium perfluorobutanesulfonate, which is an existing typical flame retardant.

Specific examples of the alkali metal include lithium, sodium, potassium, rubidium, and cesium, and specific examples of the alkaline earth metal include beryllium, magnesium, calcium, strontium, and barium. Particularly preferred are lithium, sodium, and potassium.

As the organic metal salts free of fluorine, an alkali metal salt of an aliphatic sulfonic acid, an alkaline earth metal salt of an aliphatic sulfonic acid, an alkali metal salt of an aromatic sulfonic acid, and an alkaline earth metal salt of an aromatic sulfonic acid, all of which are free of fluorine, are preferable. From the viewpoint of dispersibility with respect to the component (A), an alkali metal salt of an aromatic sulfonic acid fee of fluorine or an alkaline earth metal salt of an aromatic sulfonic acid fee of fluorine is more preferable.

Examples of the aliphatic sulfonic acid include methanesulfonic acid, ethanesulfonic acid, propanesulfonic acid, butanesulfonic acid, methylbutanesulfonic acid, hexanesulfonic acid, heptanesulfonic acid, and octanesulfonic acid.

Specific examples of the alkali (alkaline earth) metal salt of an aliphatic sulfonic acid free of fluorine include lithium methanesulfonate, sodium methanesulfonate, potassium methanesulfonate, lithium butanesulfonate, sodium butanesulfonate, potassium butanesulfonate, magnesium methanesulfonate, calcium methanesulfonate, and barium methanesulfonate.

Examples of the aromatic sulfonic acid include sulfonic acids of monomeric or polymeric aromatic sulfides, sulfonic acids of aromatic carboxylic acids and esters thereof, sulfonic acids of monomeric or polymeric aromatic ethers, sulfonic acids of aromatic sulfonates, monomeric or polymeric aromatic sulfonic acids, monomeric or polymeric aromatic sulfone sulfonic acids, sulfonic acids of aromatic ketones, heterocyclic sulfonic acids, sulfonic acids of aromatic sulfoxides, and condensates formed by methylene-type bonding of aromatic sulfonic acids.

Specific examples of the sulfonic acid alkali (alkaline earth) metal salt of a monomeric or polymeric aromatic sulfide include disodium diphenyl sulfide-4,4'-disulfonate and dipotassium diphenyl sulfide-4,4'-disulfonate.

Specific examples of the sulfonic acid alkali (alkaline earth) metal salt of an aromatic carboxylic acid or an ester thereof include potassium 5-sulfoisophthalate, sodium 5-sulfoisophthalate, and polysodium polyethylene terephthalate polysulfonate.

Specific examples of the sulfonic acid alkali (alkaline earth) metal salt of a monomeric or polymeric aromatic ether include calcium 1-methoxynaphthalene-4-sulfonate, disodium 4-dodecylphenyl ether disulfonate, polysodium poly(2,6-dimethylphenylene oxide) polysulfonate, polysodium poly(1,3-phenylene oxide) polysulfonate, polysodium poly(1,4-phenylene oxide) polysulfonate, polypotassium poly(2,6-diphenylphenylene oxide) polysulfonate, and lithium poly(2-fluoro-6-butylphenylene oxide) polysulfonate.

Specific examples of the sulfonic acid alkali (alkaline earth) metal salt of an aromatic sulfonate include potassium sulfonate of benzenesulfonate.

Specific examples of the monomeric or polymeric aromatic sulfonic acid alkali (alkaline earth) metal salt include sodium benzenesulfonate, strontium benzenesulfonate, magnesium benzenesulfonate, potassium p-toluenesulfonate, dipotassium p-benzenedisulfonate, dipotassium naphthalene-2,6-disulfonate, calcium biphenyl-3,3'-disulfonate, and sodium polystyrenesulfonate.

Specific examples of the monomeric or polymeric aromatic sulfone sulfonic acid alkali (alkaline earth) metal salt include sodium diphenyl sulfone-3-sulfonate, potassium diphenyl sulfone-3-sulfonate, dipotassium diphenyl sulfone-3,3'-disulfonate, and dipotassium diphenyl sulfone-3,4'-disulfonate.

Specific examples of the sulfonic acid alkali (alkaline earth) metal salt of an aromatic ketone include dipotassium benzophenone-3,3'-disulfonate.

Specific examples of the heterocyclic sulfonic acid alkali (alkaline earth) metal salt include disodium thiophene-2,5-disulfonate, dipotassium thiophene-2,5-disulfonate, calcium thiophene-2,5-disulfonate, and sodium benzothiophenesulfonate.

Specific examples of the sulfonic acid alkali (alkaline earth) metal salt of an aromatic sulfoxide include potassium diphenylsulfoxide-4-sulfonate.

Specific examples of the condensate formed by methylene-type bonding of an aromatic sulfonic acid alkali (alkaline earth) metal salt include a formalin condensate of sodium naphthalenesulfonate and a formalin condensate of sodium anthracenesulfonate.

As the component (C), an alkali (alkaline earth) metal salt of a sulfate ester free of fluorine can also be used, and examples of the alkali (alkaline earth) metal salt of a sulfate ester include alkali (alkaline earth) metal salts of sulfate esters of a monohydric or polyhydric alcohol. Specific examples of the sulfate esters of a monohydric or polyhydric alcohol include methyl sulfate ester, ethyl sulfate ester, lauryl sulfate ester, hexadecyl sulfate ester, a sulfate ester of polyoxyethylene alkylphenyl ether, mono-, di-, tri-, or tetra-sulfate ester of pentaerythritol, a sulfate ester of monoglyceride laurate, a sulfate ester of monoglyceride palmitate, and a sulfate ester of monoglyceride stearate. Among these, an alkali (alkaline earth) metal salt of lauryl sulfate ester is preferable.

The component (C) may be used alone, or two or more types thereof may be used in combination.

Among these, as the component (C), potassium diphenyl sulfone-3-sulfonate and sodium polystyrenesulfonate are preferable.

The amount of the component (C) blended is 0.001 to 1.0 part by weight relative to 100 parts by weight of the component (A) and is preferably 0.001 to 0.5 parts by weight, more preferably 0.005 to 0.45 parts by weight, and still more preferably 0.005 to 0.4 parts by weight.

If the amount is less than 0.001 parts by weight, flame retardancy is not obtained, and if the amount exceeds 1.0 part by weight, transparency of the composition decreases or molding defects are caused.

### [Other components]

The flame-retardant aromatic polycarbonate resin composition of the present invention may contain other components such as a thermoplastic resin other than the component (A), and an additive so long as the object of the present invention is not impaired.

Specific examples of the thermoplastic resin other than the component (A) include general-purpose plastics represented by polyethylene resins, polypropylene resins, polystyrene resins, polyacrylic-styrene resins, ABS resins, AS resins, AES resins, ASA resins, SMA resins, and polyalkyl methacrylate resins; engineering plastics represented by aliphatic polycarbonate resins, polyphenylene ether resins, polyacetal resins, aromatic polyester resins, polyamide resins, cyclic polyolefin resins, and polyarylate resins (amorphous polyarylate and liquid crystalline polyarylate); and so-called super engineering plastics such as polyether ether ketone, polyetherimide, polysulfone, polyethersulfone, and polyphenylene sulfide. Further, for example, thermoplastic elastomers such as styrene-based thermoplastic elastomers, olefin-based thermoplastic elastomers, polyamide-based thermoplastic elastomers, polyester-based thermoplastic elastomers, and polyurethane-based thermoplastic elastomers can also be used. These thermoplastic resins can be blended so long as flame retardancy is not affected.

Specific examples of the additive that can be blended include reinforcing agents (such as talc, mica, clay, wollastonite, calcium carbonate, glass fibers, glass beads, glass balloons, milled fibers, glass flakes, carbon fibers, carbon flakes, carbon beads, carbon milled fibers, metal flakes, metal fibers, metal-coated glass fibers, metal-coated carbon fibers, metal-coated glass flakes, silica, ceramic particles, ceramic fibers, aramid particles, aramid fibers, polyarylate fibers, graphite, conductive carbon black, and various whiskers), flame retardants (such as halogen-based flame retardants, phosphate ester-based flame retardants, red phosphorus, and metal hydrate-based flame retardants), heat stabilizers, antioxidants, parting agents, ultraviolet absorbers, light stabilizers, lubricants, sliding agents, colorants (pigments such as carbon black and titanium oxide, and dyes), light-diffusing agents (such as acrylic crosslinked particles, silicone crosslinked particles, ultrathin glass flakes, and calcium carbonate particles), fluorescent brighteners, phosphorescent pigments, fluorescent dyes, antistatic agents, flow modifiers, nucleating agents, inorganic and organic antibacterial agents, photocatalytic antifouling agents (such as fine particulate titanium oxide and fine particulate zinc oxide), impact modifiers represented by graft rubbers, infrared absorbers, and photochromic agents. It is preferable that various additives used in the flame-retardant aromatic polycarbonate resin composition of the present invention do not include those containing fluorine.

Examples of the heat stabilizers include phosphorus-based stabilizers. As such a phosphorus-based stabilizer, any of phosphite-based, phosphonite-based, and phosphate-based compounds can be used.

Specific examples of the phosphite compound include distearyl pentaerythritol diphosphite, bis(2,4-di-tert-butylphenyl) pentaerythritol diphosphite, bis(2,6-di-tert-butyl-4-methylphenyl) pentaerythritol diphosphite, and 4,4'-isopropylidenediphenol tetratridecyl phosphite.

Specific examples of the phosphonite compound include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, bis(2,4-di-tert-butylphenyl)-4-phenyl-phenyl phosphonite, and bis(2,4-di-tert-butylphenyl)-3-phenyl-phenyl phosphonite.

Specific examples of the phosphate-based stabilizer include trimethyl phosphate.

Examples of the antioxidants include phenol-based antioxidants and sulfur-based antioxidants.

A phenol-based antioxidant can suppress discoloration during exposure to heat and is also effective in improving flame retardancy. Specific examples of the phenol-based antioxidant include vitamin E, n-octadecyl-β-(4'-hydroxy-3',5'-di-tert-butylphenyl)propionate, 2-tert-butyl-6-(3'-tert-butyl-5'-methyl-2'-hydroxybenzyl)-4-methylphenyl acrylate, 3,9-bis{2-[3-(3-tert-butyl-4-hydroxy-5-methylphenyl)propionyloxy]-1,1-dimethylethyl}-2,4,8,10-tetraoxaspiro[5,5]undecane, and tetrakis[methylene-3-(3',5'-di-tert-butyl-4-hydroxyphenyl)propionate]methane, and further include n-octadecyl-β-(4'-hydroxy-3',5'-di-tert-butylphenyl)propionate.

A sulfur-based antioxidant is particularly suitable when the molding method is rotational molding or compression molding. Specific examples of the sulfur-based antioxidant include dilauryl-3,3'-thiodipropionate, ditridecyl-3,3'-thiodipropionate, dimyristyl-3,3'-thiodipropionate, distearyl-3,3'-thiodipropionate, lauryl stearyl-3,3'-thiodipropionate, pentaerythritol tetra(β-laurylthiopropionate) ester, bis[2-methyl-4-(3-laurylthiopropionyloxy)-5-tert-butylphenyl] sulfide, octadecyl disulfide, mercaptobenzimidazole, 2-mercapto-6-methylbenzimidazole, and 1,1'-thiobis(2-naphthol).

When the phosphorus-based stabilizer, the phenol-based antioxidant, and the sulfur-based antioxidant are used, the blending amounts thereof are each preferably 0.0001 to 1 part by weight, more preferably 0.0005 to 0.5 parts by weight, and still more preferably 0.001 to 0.2 parts by weight relative to 100 parts by weight of the component (A).

Examples of the parting agents include saturated fatty acid esters, unsaturated fatty acid esters, polyolefin waxes, modified polyolefin waxes, polysiloxanes other than the component (B) (for example, linear or cyclic polydimethylsiloxane, linear or cyclic polymethylphenylsiloxane, and functional group-modified polysiloxanes), paraffin wax, beeswax, and saturated fatty acid esters (for example, monoglycerides such as monoglyceride stearate, polyglycerin fatty acid esters such as decaglycerin decastearate and decaglycerin tetrastearate, lower fatty acid esters such as stearyl stearate, higher fatty acid esters such as behenyl sebacate, and erythritol esters such as pentaerythritol tetrastearate). Among these, saturated fatty acid esters, linear or cyclic polydimethylsiloxane, and linear or cyclic polymethylphenylsiloxane are preferable.

When a parting agent is used, the blending amount thereof is preferably 0.01 to 0.3 parts by weight relative to 100 parts by weight of the component (A).

Examples of the ultraviolet absorbers include benzophenone-based ultraviolet absorbers, benzotriazole-based ultraviolet absorbers, and hydroxyphenyltriazine-based ultraviolet absorbers.

Specific examples of the benzophenone-based ultraviolet absorbers include 2,4-dihydroxybenzophenone, 2-hydroxy-4-methoxybenzophenone, 2-hydroxy-4-n-octyloxybenzophenone, 2-hydroxy-4-n-dodecyloxybenzophenone, 2-hydroxy-4-benzyloxybenzophenone, 2,2'-dihydroxy-4-methoxybenzophenone, 2-hydroxy-4-methoxy-2'-carboxybenzophenone, 2-hydroxy-4-methoxy-5-sulfoxybenzophenone, 2,2'-dihydroxy-4,4'-dimethoxybenzophenone, 2,2',4,4'-tetrahydroxybenzophenone, 2,2'-dihydroxy-4,4'-dimethoxy-5-sodium sulfoxybenzophenone, and bis(5-benzoyl-4-hydroxy-2-methoxyphenyl)methane.

Specific examples of the benzotriazole-based ultraviolet absorbers include 2-(2'-hydroxy-5'-methylphenyl)benzotriazole, 2-(2'-hydroxy-5'-tert-butylphenyl)benzotriazole, 2-(2'-hydroxy-5'-tert-octylphenyl)benzotriazole, 2-(2'-hydroxy-3',5'-di-tert-butylphenyl)benzotriazole, 2-(2'-hydroxy-3',5'-di-tert-amylphenyl)benzotriazole, 2-(2'-hydroxy-3'-dodecyl-5'-methylphenyl)benzotriazole, 2-(2'-hydroxy-3',5'-bis(α,α'-dimethylbenzyl)phenyl)benzotriazole, 2-[2'-hydroxy-3'-(3",4",5",6"-tetraphthalimidomethyl)-5'-methylphenyl]benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2,2'-methylenebis[4-(1,1,3,3-tetramethylbutyl)-6-(2H-benzotriazol-2-yl)phenol], and a condensate of methyl-3-[3-tert-butyl-5-(2H-benzotriazol-2-yl)-4-hydroxyphenylpropionate] with polyethylene glycol.

Specific examples of the hydroxyphenyltriazine-based ultraviolet absorbers include 2-(4,6-diphenyl-1,3,5-triazin-2-yl)-5-hexyloxy-phenol and 2-(4,6-bis-(2,4-dimethylphenyl)-1,3,5-triazin-2-yl)-5-hexyloxy-phenol.

As the light stabilizers, hindered amine light stabilizers can be used, and specific examples thereof include bis(2,2,6,6-tetramethyl-4-piperidyl) sebacate, bis(1,2,2,6,6-pentamethyl-4-piperidyl) sebacate, bis(1,2,2,6,6-pentamethyl-4-piperidyl)-2-(3,5-di-tert-butyl-4-hydroxybenzyl)-2-n-butylmalonate, a condensate of 1,2,3,4-butanetetracarboxylic acid with 2,2,6,6-tetramethyl-4-piperidinol and tridecyl alcohol, a condensate of 1,2,3,4-butanetetracarboxylic acid with 1,2,2,6,6-pentamethyl-4-piperidinol and tridecyl alcohol, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, poly{[6-(1,1,3,3-tetramethylbutyl)amino-1,3,5-triazine-2,4-diyl][(2,2,6,6-tetramethylpiperidyl)imino]hexamethylene[(2,2,6,6-tetramethylpiperidyl)imino]}, poly{[6-morpholino-s-triazine-2,4-diyl][(2,2,6,6-tetramethylpiperidyl)imino]-hexamethylene[(2,2,6,6-tetramethylpiperidyl)imino]}, a condensate of 1,2,3,4-butanetetracarboxylic acid with 2,2,6,6-tetramethyl-4-piperidinol and β,β,β',β'-tetramethyl-3,9-(2,4,8,10-tetraoxaspiro[5,5]undecane)diethanol, a condensate of N,N'-bis(3-aminopropyl)ethylenediamine with 2,4-bis[N-butyl-N-(1,2,2,6,6-pentamethyl-4-piperidyl)amino]-chloro-1,3,5-triazine, a condensate of 1,2,3,4-butanetetracarboxylic acid with 1,2,2,6,6-pentamethyl-4-piperidinol and β,β,β',β'-tetramethyl-3,9-(2,4,8,10-tetraoxaspiro[5,5]undecane)diethanol, and polymethylpropyl 3-oxy-[4-(2,2,6,6-tetramethyl)piperidinyl]siloxane.

When an ultraviolet absorber and a light stabilizer are used, the blending amounts thereof are each preferably 0.01 to 5 parts by weight, more preferably 0.02 to 1 part by weight relative to 100 parts by weight of the component (A).

Further, in the flame-retardant aromatic polycarbonate resin composition of the present invention, a bluing agent can be blended in order to offset the yellow tint derived from an ultraviolet absorber or the like. As the bluing agent, any bluing agent used in polycarbonate resins can be used without any particular problem, but anthraquinone dyes are preferable because they are easily available.

The method for producing the flame-retardant aromatic polycarbonate resin composition of the present invention is not particularly limited, and any method is employed. An example thereof is a method in which the components (A) to (C) and, as necessary, other components are sufficiently mixed using premixing means such as a hand mixer, a V-type blender, a Henschel mixer, a mechanochemical apparatus, or an extrusion mixer, then granulated with an extrusion granulator, a briquetting machine, or the like, then melt-kneaded with a melt-kneading machine typified by a vented twin-screw extruder, and pelletized with equipment such as a pelletizer.

Other examples thereof include a method in which the components (A) to (C) and, as necessary, other components are each independently supplied to a melt-kneading machine typified by a vented twin-screw extruder, a method in which two or more of the components (A) to (C) are partially premixed, and then supplied to a melt-kneading machine independently from the remaining components, a method in which the component (B) is diluted with an organic solvent and then supplied to a melt-kneading machine, and a method in which a mixture prepared by diluting the component (B) with an organic solvent is premixed with other components and then supplied to a melt-kneading machine. When a component to be blended is in a liquid form, a so-called liquid injection device or liquid addition device can be used for supplying the component to the melt-kneading machine. The heating temperature during kneading is not particularly limited, but is preferably, for example, 200°C to 350°C.

### [2] Molding method and molded article

Various molded articles can be produced by injection-molding the flame-retardant aromatic polycarbonate resin composition of the present invention. In injection molding, the production can be performed not only by a usual cold runner molding method but also by a hot runner that enables runnerless molding. As the injection molding method, gas-assisted injection molding, injection compression molding, ultra-high-speed injection molding, or the like can be used.

Alternatively, by extrusion-molding the flame-retardant aromatic polycarbonate resin composition of the present invention, the resin composition can also be used in the forms of various profile extrusion molded articles, sheets, films, and the like. For molding sheets and films, an inflation method, a casting method, or the like can also be used.

Further, the transparent flame-retardant aromatic polycarbonate resin composition of the present invention can also be molded into a heat-shrinkable tube by a stretching operation or can also be formed into a molded article by rotational molding.

The heating temperature during molding is also not particularly limited, but injection molding is preferably performed at a mold temperature of 60°C or more, particularly 80°C to 120°C. In this case, the resin temperature in injection molding is, for example, preferably 250°C to 360°C, and more preferably 280°C to 330°C.

### EXAMPLES

Hereinafter, the present invention will be described in more detail with reference to Synthesis Examples, Comparative Synthesis Examples, Examples, and Comparative Examples, but the present invention is not limited to these Examples. Physical properties of organohydrogenpolysiloxanes in the following Synthesis Examples and Comparative Synthesis Examples were measured by the following methods.

### (1) Weight-average molecular weight (Mw)

The weight-average molecular weight was measured by gel permeation chromatography (GPC) based on standard polystyrene.

### <GPC measurement conditions>

| | |
|---|---|
| Apparatus: | HLC-8320GPC, manufactured by Tosoh Corporation |
| Columns: | TSKgel G4000HXL + G3000HXL + G2000HXL + G2000HXL (each having an inner diameter of 6 mm and a length of 150 mm), manufactured by Tosoh Corporation |
| Eluent: | tetrahydrofuran |
| Column oven temperature: | 40°C |
| Flow rate: | 1 mL/min |
| Detector: | refractive index (RI) |
| Standard: | monodisperse polystyrene |

### (2) Volatile content

The volatile content was calculated as a weight loss (% by weight) when heated at 150°C for 30 minutes at 1 atm.

### (3) Amounts of chloride ions (Cl⁻) and sulfate ions (SO₄²⁻)

Twenty grams of an obtained organohydrogenpolysiloxane was dissolved in 20 mL of toluene, 20 g of pure water was added, shaking was performed for two hours, and ions were extracted into the aqueous layer. Chloride ions and sulfate ions in the aqueous layer were measured by ion chromatography.

### (4) Amount of hydrogen gas generated

At 25°C, 2 g of an organohydrogenpolysiloxane was diluted with 5 mL of 1-butanol, 10 mL of a 20% by weight aqueous sodium hydroxide solution was added, and hydrogen gas generated upon stirring was quantified with a gas burette. The amount of hydrogen gas generated was calculated by the following formula. 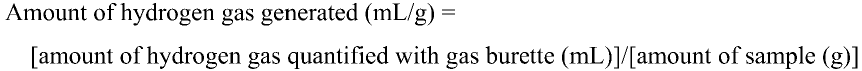 Amount of hydrogen gas generated (mL/g) = [amount of hydrogen gas quantified with gas burette (mL)]/[amount of sample (g)]

### (5) Average constitutional unit ratio

Peak areas derived from the respective units in a ²⁹Si-NMR spectrum were calculated with the total peak area of siloxane units taken as 1.

### [1] Synthesis of organohydrogenpolysiloxane

### [Synthesis Example 1]

In a 1 L flask equipped with a stirrer, a condenser, and a thermometer, while 75.6 g of hexamethyldisiloxane, 62.9 g of 1,3,5,7-tetramethylcyclotetrasiloxane, 38.5 g of octamethylcyclotetrasiloxane, and 394.0 g of diphenyldimethoxysilane were stirred, 25.0 g of p-toluenesulfonic acid was added. After cooling was performed to an internal temperature of 10°C, 31.5 g of water was added, and the resulting mixture was stirred for five hours to perform an equilibration reaction. Subsequently, washing with water was repeated until the toluene layer became neutral, and the resulting toluene solution was concentrated under reduced pressure to obtain an organohydrogenpolysiloxane B-1 as a colorless transparent liquid.

The organohydrogenpolysiloxane B-1 had Mw: 910, volatile content: 1.4% by weight, amounts of chloride ions and sulfate ions: 1 ppm by weight or less each, and amount of hydrogen gas generated: 51.0 mL/g, and the average constitutional unit ratio was [(R¹¹O)(CH₃)₂SiO_{1/2}]_{0.010}[(CH₃)₃SiO_{1/2}]_{0.231}[H(CH₃)SiO_{2/2}]_{0.332}[(C₆H₅)₂SiO_{2/2}]_{0.305}[(CH₃)₂Si O_{2/2}]_{0.122} (R¹¹: methyl group or hydrogen atom).

### [Synthesis Example 2]

In a 1 L flask equipped with a stirrer, a condenser, and a thermometer, while 154.6 g of water, 3.6 g of toluene, and 2.2 of hexane were stirred at an internal temperature of 80°C, a mixture of 94.4 g of phenyltrichlorosilane, 55.6 g of diphenyldichlorosilane, and 5.5 g of dimethyldichlorosilane was added dropwise over two hours using a dropping funnel, 23.2 g of toluene was then added, 20.1 g of dimethylchlorosilane was added dropwise, and 38.0 g of warm water at 70°C was then added, followed by stirring at 70°C for one hour. After completion of the reaction, 111.0 g of toluene was added, washing with water was performed until the toluene layer became neutral, the resulting toluene solution was concentrated under reduced pressure, and the obtained white solid was pulverized into powder using a mill mixer to obtain an organohydrogenpolysiloxane B-2.

The organohydrogenpolysiloxane B-2 had Mw: 8,000, volatile content: 0.3% by weight, amounts of chloride ions and sulfate ions: 1 ppm by weight or less each, and amount of hydrogen gas generated: 32.7 mL/g, and the average constitutional unit ratio was [(R¹¹O)(CH₃)₂SiO_{1/2}]_{0.023}[H(CH₃)₂SiO_{1/2}]_{0.184}[(C₆H₅)₂SiO_{2/2}]_{0.246}[(CH₃)₂SiO_{2/2}]_{0.047}[C₆H₅Si O_{3/2}]_{0.500} (R¹¹: methyl group or hydrogen atom).

### [Comparative Synthesis Example 1]

The same procedure as in Synthesis Example 1 was performed except that p-toluenesulfonic acid was changed to 15 g of sulfuric acid in Synthesis Example 1, thereby obtaining an organohydrogenpolysiloxane BR-1 as a colorless transparent liquid.

The organohydrogenpolysiloxane BR-1 had Mw: 890, volatile content: 1.9% by weight, amounts of chloride ions and sulfate ions: 1 ppm by weight or less each, and amount of hydrogen gas generated: 49.0 mL/g, and the average constitutional unit ratio was [(CH₃)₃SiO_{1/2}]_{0.255}[H(CH₃)SiO_{2/2}]_{0.329}[(C₆H₅)₂SiO_{2/2}]_{0.279}[(CH₃)₂SiO_{2/2}]_{0.137}.

### [Comparative Synthesis Example 2]

The same procedure as in Synthesis Example 2 was performed except that dimethylchlorosilane was changed to 21.5 g of trimethylchlorosilane in Synthesis Example 2, thereby obtaining an organopolysiloxane BR-2 as a white powder.

The organopolysiloxane BR-2 had Mw: 6,800, volatile content: 0.5% by weight, amounts of chloride ions and sulfate ions: 1 ppm or less each, amount of hydrogen gas generated: 0 mL/g, and the average constitutional unit ratio was

[(CH₃)₃SiO_{1/2}]_{0.230}[(C₆H₅)₂SiO_{2/2}]_{0.262}[(CH₃)₂SiO_{2/2}]_{0.062}[C₆H₅SiO_{3/2}]_{0.446}.

### [Comparative Synthesis Example 3]

The same procedure as in Synthesis Example 2 was performed except that the amount of water was changed to 188.9 g and the amount of dimethylchlorosilane was changed to 11.6 g in Synthesis Example 2, thereby obtaining an organohydrogenpolysiloxane BR-3 as a white powder.

The organohydrogenpolysiloxane BR-3 had Mw: 11,500, volatile content: 0.2% by weight, amounts of chloride ions and sulfate ions: 1 ppm or less each, amount of hydrogen gas generated: 30.8 mL/g, and the average constitutional unit ratio was [(R¹¹O)(CH₃)₂SiO_{1/2}]_{0.013}[H(CH₃)₂SiO_{1/2}]_{0.102}[(C₆H₅)₂SiO_{2/2}]_{0.314}[(CH₃)₂SiO_{2/2}]_{0.109}[C₆H₅Si O_{3/2}]_{0.462} (R¹¹: methyl group or hydrogen atom).

### [2] Production of polycarbonate resin composition

### [Examples 1 to 7 and Comparative Examples 1 to 6]

The following components were mixed to prepare resin compositions. Specifically, first, a component (A) was preliminarily dried at 120°C for 10 hours using a hot-air circulation dryer. Next, components A-1 to A-6 were each weighed according to the composition ratios (parts by weight) shown in Tables 2 and 3 and were supplied to a first hopper. Further, a mixture prepared by mixing a component A-7, a component (B), a component (C), and a component (D) with a mixer was supplied to a second hopper. The components in each of the hoppers were fed from a gravimetric weighing single-screw feeder (KS60, manufactured by K-Tron), and resin compositions were prepared using a co-rotating twin-screw extruder (OMega30H, manufactured by STEER). Strands were extruded under conditions of a barrel set temperature of 280°C, cooled in a water bath, and then strand-cut with a pelletizer, thereby pelletizing the strands. The extrusion conditions are as follows.

Discharge rate: 20 kg/h, Screw rotation speed: 150 rpm, Resin temperature: 308°C, Torque: 150 to 180 N·m, Resin pressure: 2.1 to 2.5 MPa

The obtained pellets were dried at 120°C for six hours in a hot-air circulation dryer, and a molded article having a thickness of 2 mm was molded at a cylinder temperature of 280°C to 300°C and a mold temperature of 83°C using an electric injection molding machine (J100ADS-110, manufactured by The Japan Steel Works, Ltd.). The injection conditions are as follows.

Filling speed: 30 mm/s, Injection pressure: 155 to 165 MPa, Injection time: 0.7 seconds, Dwell pressure: 140 MPa, Dwell speed: 30 mm/s, Injection dwell time: 3 seconds, Dwell time: 2.3 seconds, Clamping force: 1,000 kN

### Component (A)

| | |
|---|---|
| A-1: | Branched polycarbonate resin (Novarex M-7027U pellets, manufactured by Mitsubishi Engineering-Plastics Corporation, MVR 2.9 cm³/10 min) |
| A-2: | Branched polycarbonate resin (Novarex M-7025U pellets, manufactured by Mitsubishi Engineering-Plastics Corporation, MVR 8 cm³/10 min) |
| A-3: | High-molecular-weight polycarbonate resin (Panlite K-1300Y pellets, manufactured by Teijin Limited, MVR 2.8 cm³/10 min) |
| A-4: | High-molecular-weight polycarbonate resin (Tarflon IR-2500 pellets, manufactured by Idemitsu Kosan Co., Ltd., MVR 8 cm³/10 min) |
| A-5: | Standard polycarbonate resin (Iupilon S-3000N pellets, manufactured by Mitsubishi Engineering-Plastics Corporation, MVR 14 cm³/10 min) |
| A-6: | Bisphenol A polycarbonate resin pellets derived from water bottles collected from the market (MVR 14 cm³/10 min) |
| A-7: | Standard polycarbonate resin (Tarflon FN-2200 flakes, manufactured by Idemitsu Kosan Co., Ltd., MVR 12 cm³/10 min) |

### Component (B)

| | |
|---|---|
| B-1: | Organohydrogenpolysiloxane obtained in Synthesis Example 1 |
| B-2: | Organohydrogenpolysiloxane obtained in Synthesis Example 2 |
| BR-1: | Organohydrogenpolysiloxane obtained in Comparative Synthesis Example 1 |
| BR-2: | Organopolysiloxane obtained in Comparative Synthesis Example 2 |
| BR-3: | Organohydrogenpolysiloxane obtained in Comparative Synthesis Example 3 |

### Component (C)

| | |
|---|---|
| C-1: | Potassium diphenyl sulfone sulfonate (KSS-FR, manufactured by Arichem, LLC). |
| C-2: | Sodium polystyrenesulfonate (VERSA-TL502, manufactured by Nouryon). |

### Component (D) (Other components)

| | |
|---|---|
| D-1: | Phosphate-based antioxidant (ADEKA STAB PEP-36, manufactured by ADEKA Corporation) |
| D-2: | Phenol-based antioxidant (ADEKA STAB AO-50, manufactured by ADEKA Corporation) |
| D-3: | Special fatty acid ester-based parting agent (Rikester EW-440, manufactured by Riken Vitamin Co., Ltd.) |

### [3] Evaluation of properties of molded articles

The following property evaluations were performed on the obtained molded articles having a thickness of 2 mm. The results are shown in Tables 2 and 3.

### (6) Transparency (Haze)

Transparency of each molded article was measured as a haze value in accordance with JIS K7105.

### (7) UL-94 standard vertical flame test

A UL-94 standard vertical flame test was performed using a strip-shaped molded article having a length of 127 mm, a width of 13 mm, and a thickness of 2 mm, which was prepared in accordance with the United States UL standard. Specifically, flame retardancy was evaluated based on the evaluation criteria shown in Table 1 from a flaming time after a burner flame was applied to a lower end of a specimen held vertically for 10 seconds and from a dripping property (cotton ignition due to dripping).

Herein, the flaming time refers to a length of time during which the specimen continues flaming combustion after an ignition source is removed away. The cotton ignition due to dripping is determined by whether marking cotton located about 300 mm below the lower end of the specimen is ignited by dripping matter from the specimen. Five specimens were used for one molding material, the flaming combustion time was evaluated as the total time of the five specimens, and cotton ignition due to dripping was evaluated as "no ignition" when no ignition was observed in all the five specimens.

**[Table 1]**

| UV94 rating | V-0 | V-1 | V-2 |
|---|---|---|---|
| Total flaming combustion time for 5 specimens | 50 seconds or less | 250 seconds or less | 250 seconds or less |
| Cotton ignition due to dripping | No | No | Yes |

**[Table 2]**

| | | | Example 1 | Example 2 | Example 3 | Example 4 | Example 5 | Example 6 | Example 7 |
|---|---|---|---|---|---|---|---|---|---|
| Composition (parts by weight) | (A) | A-1 | 90 | 55 | | | | 90 | 55 |
| | | A-2 | | | 85 | | | | |
| | | A-3 | | | | 70 | | | |
| | | A-4 | | | | | 90 | | |
| | | A-5 | | 35 | | 20 | | | |
| | | A-6 | | | | | | | 35 |
| | | A-7 | 10 | 10 | 15 | 10 | 10 | 10 | 10 |
| | (B) | B-1 | 2 | 4 | 2 | 3 | | | 2 |
| | | B-2 | | | | | 3 | 2 | |
| | (C) | C-1 | 0.2 | 0.2 | 0.2 | 0.2 | 0.2 | | 0.2 |
| | | C-2 | | | | | | 0.2 | |
| | (D) | D-1 | 0.1 | 0.1 | 0.1 | 0.1 | 0.1 | 0.1 | 0.1 |
| | | D-2 | 0.1 | 0.1 | 0.1 | 0.1 | 0.1 | 0.1 | 0.1 |
| | | D-3 | 0.1 | 0.1 | 0.1 | 0.1 | 0.1 | 0.1 | 0.1 |
| Transparency | | | 8.5 | 6.7 | 7.1 | 9.2 | 10.2 | 14.5 | 10.4 |
| UV94 rating | | | V-0 | V-0 | V-0 | V-0 | V-0 | V-0 | V-0 |
| Total flaming combustion time for 5 specimens (sec) | | | 35 | 44 | 40 | 46 | 41 | 48 | 39 |
| Cotton ignition due to dripping | | | No | No | No | No | No | No | No |

**[Table 3]**

| | | | Comp. Example 1 | Comp. Example 2 | Comp. Example 3 | Comp. Example 4 | Comp. Example 5 | Comp. Example 6 |
|---|---|---|---|---|---|---|---|---|
| Composition (parts by weight) | (A) | A-1 | 90 | | | | | |
| | | A-2 | | 90 | | | | 90 |
| | | A-3 | | | | 90 | | |
| | | A-4 | | | 85 | | | |
| | | A-5 | | | | | 90 | |
| | | A-6 | | | | | | |
| | | A-7 | 10 | 10 | 15 | 10 | 10 | 10 |
| | (B) or (BR) | B-1 | | 2 | | | 5 | |
| | | B-2 | | | | | | |
| | | BR-1 | | | 3 | | | |
| | | BR-2 | | | | 2 | | |
| | | BR-3 | | | | | | 2 |
| | (C) | C-1 | 0.2 | | 0.2 | 0.2 | 0.3 | 0.3 |
| | | C-2 | | | | | | |
| | (D) | D-1 | 0.1 | 0.1 | 0.1 | 0.1 | 0.1 | 0.1 |
| | | D-2 | 0.1 | 0.1 | 0.1 | 0.1 | 0.1 | 0.1 |
| | | D-3 | 0.1 | 0.1 | 0.1 | 0.1 | 0.1 | 0.1 |
| Transparency | | | 6.7 | 7.7 | 7.5 | 10.6 | 9.7 | 13.4 |
| UV94 rating | | | V-2 | V-2 | V-2 | V-2 | V-2 | V-1 |
| Total flaming combustion time for 5 specimens (sec) | | | 53 | 153 | 48 | 137 | 65 | 65 |
| Cotton ignition due to dripping | | | Yes | Yes | Yes | Yes | Yes | No |

As shown in Table 2, the flame-retardant aromatic polycarbonate resin compositions of Examples 1 to 7 are excellent in flame retardancy.

On the other hand, as shown in Table 3, in Comparative Example 1 in which the component (B) was not blended and Comparative Example 2 in which the component (C) was not blended, cotton ignition due to dripping occurred.

Also in Comparative Example 3 and Comparative Example 4 in which the component (B) was changed to BR-1 and BR-2, respectively, which did not have a constitutional unit [(R¹O)(R²)₂SiO_{1/2}], cotton ignition due to dripping occurred.

Furthermore, also in Comparative Example 5 in which only aromatic polycarbonate resins having an MVR of more than 8 cm³/10 min were used, cotton ignition due to dripping was observed.

In Comparative Example 6 in which the component (B) was changed to an organohydrogenpolysiloxane having a weight-average molecular weight of more than 10,000, although cotton ignition due to dripping did not occur, the flaming combustion time was long, resulting in poor flame retardancy.

As is clear from the above, the flame-retardant aromatic polycarbonate resin compositions of the present invention have good anti-dripping performance and excellent transparency because the resin compositions contain, as flame retardants, an organopolysiloxane and at least one selected from an organic alkali metal salt and an organic alkaline earth metal salt.

The flame-retardant aromatic polycarbonate resin compositions of the present invention have an advantage of containing substantially no fluorinated organic compound.

In addition, the resin compositions of the present invention also have high thermal stability even during melting at a high temperature such as during injection molding. Therefore, the resin compositions are extremely useful not only for lighting covers and protective covers for transmissive displays but also for various industrial uses in the fields of OA equipment, electrical and electronic equipment, and the like, and the industrial effects exhibited thereby are outstanding.

## Claims

1. A flame-retardant aromatic polycarbonate resin composition comprising:
(A) 100 parts by weight of an aromatic polycarbonate resin,
(B) 0.1 to 10 parts by weight of an organohydrogenpolysiloxane represented by the following formula (1) and having a weight-average molecular weight of 700 to 10,000, and
(C) 0.001 to 1.0 part by weight of at least one selected from an organic alkali metal salt free of fluorine and an organic alkaline earth metal salt free of fluorine,
wherein the flame-retardant aromatic polycarbonate resin composition contains an aromatic polycarbonate resin having a melt volume-flow rate (MVR) of 2 to 8 cm³/10 min as measured at 300°C and a load of 1.2 kg in accordance with ISO 1133-1, in an amount of 20% by weight or more relative to a total weight of the component (A):
[(R¹O)(R²)₂SiO_{1/2}]ₐ[(R³)₃SiO_{1/2}]_{b}[(H)(R⁴)SiO_{2/2}]_{c}[(Ar)ₓ(R⁵)₂₋ₓSiO_{2/2}]_{d}[(R⁶)₂SiO_{2/2}]ₑ[(R⁷)SiO_{3/2}]_{f} (1)
wherein R¹ is a hydrogen atom or an alkyl group having 1 to 3 carbon atoms,
R² and R³ are each independently a hydrogen atom, an alkyl group having 1 to 6 carbon atoms, or an aryl group having 6 to 12 carbon atoms,
R⁴ is an alkyl group having 1 to 6 carbon atoms or an aryl group having 6 to 12 carbon atoms, each Ar is independently an aryl group having 6 to 12 carbon atoms,
R⁵ and R⁶ are each independently an alkyl group having 1 to 6 carbon atoms,
each R⁷ is independently an alkenyl group having 2 to 8 carbon atoms, an aryl group having 6 to 12 carbon atoms, or an alkyl group that has 1 to 8 carbon atoms and that may be substituted with an epoxy group, an amino group, an acryloyl group, a methacryloyl group, or a thiol group,
x represents 1 or 2,
a is a number satisfying 0 < a ≤ 0.03,
b is a number satisfying 0 < b ≤ 0.30,
c is a number satisfying 0 ≤ c ≤ 0.45,
d is a number satisfying 0.20 ≤ d ≤ 0.70,
e is a number satisfying 0 ≤ e ≤ 0.20,
f is a number satisfying 0 ≤ f ≤ 0.70, and
a + b + c + d + e + f is 1,
provided that, when c is 0, at least one of R² and R³ is a hydrogen atom.

2. The flame-retardant aromatic polycarbonate resin composition according to claim 1, wherein, in the formula (1), Ar is a phenyl group, x is 2, and f is 0.

3. The flame-retardant aromatic polycarbonate resin composition according to claim 1 or 2, wherein the component (C) is an alkali metal salt of an aromatic sulfonic acid free of fluorine or an alkaline earth metal salt of an aromatic sulfonic acid free of fluorine.

4. A molded article molded from the flame-retardant aromatic polycarbonate resin composition according to any one of claims 1 to 3.
